# EUROPEAN PATENT SPECIFICATION

(11) **EP 2 942 454 B1**
(45) Date of publication and mention of the grant of the patent: **07.11.2018**
(21) Application number: 14166988.7
(22) Date of filing: 05.05.2014
(51) Int. Cl.: E04H 4/00, A01K 63/00

(54) **Foldable Pond device**
Faltbarer Gartenteich
Bassin pliable

(43) Date of publication of application: 11.11.2015
(73) Proprietor: Ubbink Garden B.V., 1822 BN Alkmaar (NL)
(72) Inventor: Klaus, Hartmut, 46395 Bocholt (DE)
(74) Representative: Hooiveld, Arjen Jan Winfried

(56) References cited:
- CA-A1- 2 363 805
- GB-A- 1 261 770
- US-A- 2 878 488
- US-B1- 6 408 454

## Description

The present invention relates to a pond device comprising a fluid reservoir, at least two opposing first side walls and at least two opposing second side walls. The invention in particular relates to a pond device that is placed on a ground surface, in particular a lawn or a paved surface (for example a terrace), or a balcony. The fluid reservoir is preferably a water reservoir.

Such a pond device is generally known, for example from US 2, 878, 488 A. In particular garden centres are experiencing an increasing public interest in all kinds of garden ornaments and related articles. Said public interest in particular results from an increasing need that people feel to embellish the surroundings of their houses, in particular the garden, for example with ponds. Especially the last few years there has been a increasing interest in ponds that can be placed on a ground surface without much bother (i.e. without using complex tools and that within a short time), and from which water, for example, can spout up with some force in a decorative manner.
The object of the invention is to provide an inexpensive pond device which is easy to install on a ground surface and which meets the public's increasing need to arrange a garden in a decorative way without harming the quality and the decorative nature of the pond.

In order to accomplish that object, a device according to appended claim 1 is provided.

As a result, the pond device can be brought to the destination site in the collapsed (flat) position and subsequently be manually unfolded on-site for direct use. In particular, the second side walls are pivoted inward in the collapsed position, being disposed between the first side walls, with the second side walls including an angle with the first side walls in the unfolded position. In another preferred variant, the second side walls are pivoted outward in the collapsed position, with the second side walls including an angle with the first side walls in the unfolded position.
The invention also makes it possible to transport the pond device in an efficient manner in the collapsed position. A pump may be installed in the fluid reservoir for spouting fluid, for example water, up from the reservoir with some force in a decorative manner.
In a preferred embodiment of a pond device according to the invention, the second side walls each comprise at least two mutually pivotable side panels for pivoting the second side walls inward/outward in the collapsed position, wherein the side panels of each second side wall face one another in the collapsed position.
In another preferred embodiment of a pond device according to the invention, the pond device also comprises a bottom which is pivotally connected to at least one of the first side walls, which bottom faces said first side wall in the collapsed position and which includes an at least substantially right angle with said first side wall in the unfolded position. Preferably, the bottom comprises at least two bottom panels which are pivotally connected to the first side walls, wherein each bottom panel faces a corresponding first side wall in the collapsed position and includes an at least substantially right angle therewith in the unfolded position.
In another preferred embodiment of a pond device according to the invention, the pond device is at least substantially made of plastic or wood. Preferably, the first side walls and/or the second side walls are lined as desired on the outer side with a lining provided with a decorative design.
In another preferred embodiment of a pond device according to the invention, a flexible bag is provided between the first side walls and the second side walls in the unfolded position so as to form the fluid reservoir. In particular, the first side walls and the second side walls are provided with a strengthening, i.e. stiffening, element near their edges, which stiffening element is made up of a rectangular frame.
The invention will now be explained in more detail with reference to figures shown in a drawing, in which:
- Figure 1 is a schematic, perspective view of a preferred variant of a pond device according to the invention;
- Figures 2-6 show steps of a method of building up the pond device of figure 1.

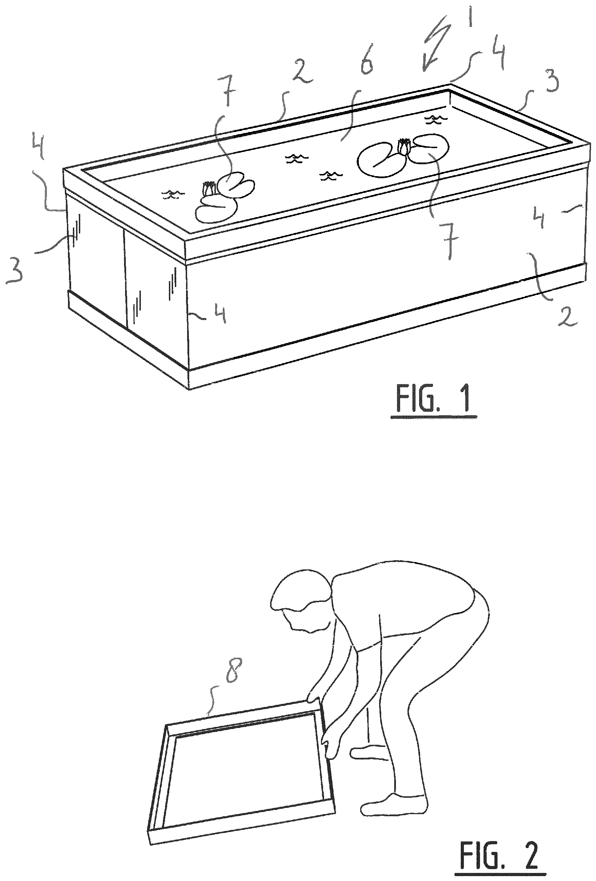

In figure 1, there is shown a plastic pond device 1 of rectangular cross-section according to the invention, comprising two opposing first side walls 2 and two opposing second side walls 3. The side walls 2, 3 define between them a reservoir 6 filled with water, on which lilies 7 float, for example.

As will be explained in more detail with reference to figures 2-6, the first and the second side walls 2, 3 are pivotally interconnected along edges 4 thereof, so that the pond device 1 can be moved between a collapsed position, in which the first side walls 2 face one another, and an unfolded position, in which the first side walls 2 face away from each other. As shown, the first side walls 2 and the second side walls 3 define between them the water reservoir 6 in the unfolded position.

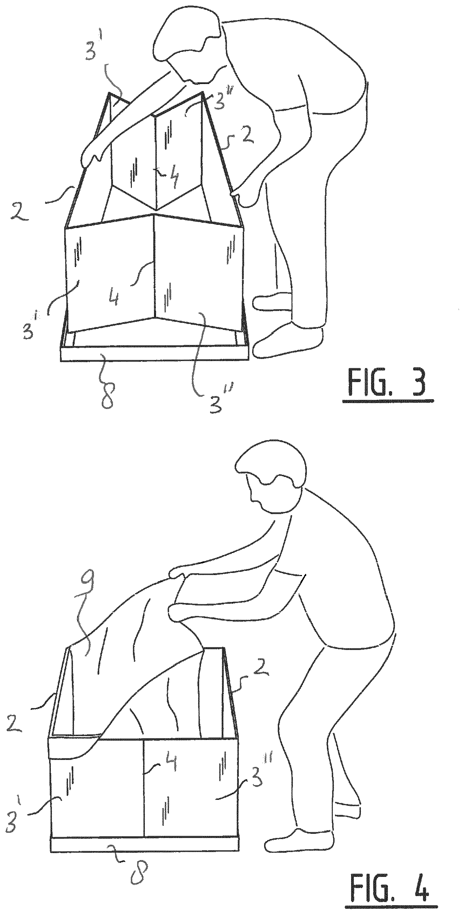

With reference to figures 2-6, a first rectangular stiffening frame 8 is manually placed on a ground surface, for example a terrace, (figure 2), for assembling the pond device 1 of figure 1. Then the pond device 1 is folded or swung from the collapsed position, in which the second side walls 3 are pivoted inward, being disposed between the first side walls 2, to the unfolded position, in which the second side walls 3 include a right angle with the first side walls 2. Reference is made in this regard to figures 3 and 4. As shown, each second side wall 3 comprises two mutually pivotable side panels 3', 3" for pivoting the second side walls 3 inward to the collapsed position. In the collapsed position, the side panels 3', 3" of each second side wall 3 face one another.

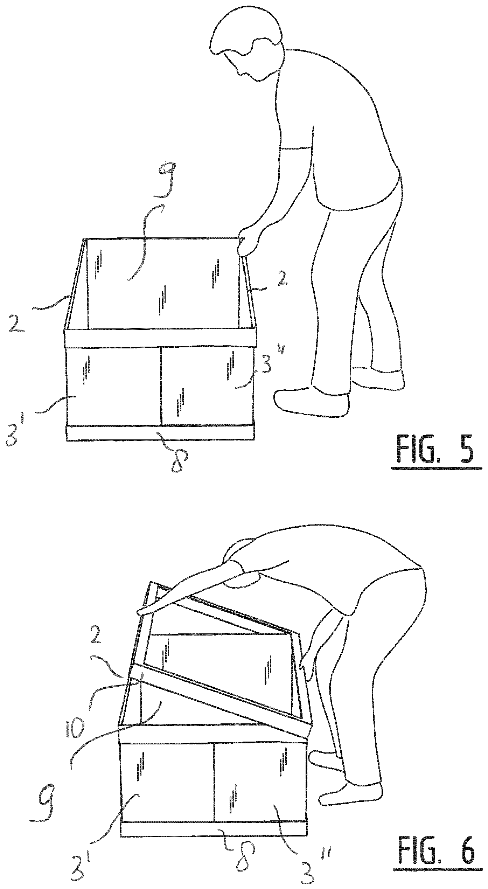

As shown in figures 4, 5 and 6, a bag 9 of a flexible foil is placed between the first and the second side walls 2, 3 and folded over the upper edges thereof so as to form the water reservoir 6 (figures 4 and 5). Finally, a second rectangular stiffening frame 10 is placed over edges of the flexible bag 9 (figure 6). The stiffening frames 8, 10 at the bottom side and the upper side of the pond device 1 function to stiffen edges thereof. The pond device 1 can subsequently be filled with water and be decorated with floating lilies 7.

It is noted that the present invention is not limited to the embodiment shown herein, but that it also extends to other preferred variants that fall within the scope of the appended claims.

## Claims

1. A pond device (1) comprising a fluid reservoir (6), at least two opposing first side walls (2) and at least two opposing second side walls (3), whereby the pond device can be moved between a collapsed position, in which the first side walls (2) face one another, and an unfolded position, in which the first side walls (2) face away from each other, wherein the first and the second side walls (2, 3) are pivotally interconnected along edges (4) thereof, and wherein the first side walls (2) and the second side walls (3) jointly define the fluid reservoir (6) in the unfolded position, **characterised in that** the first side walls (2) and the second side walls (3) are provided with a stiffening element near their edges, wherein the stiffening element is made up of a rectangular frame (8, 10).

2. A pond device (1) according to claim 1, wherein the second side walls (3) are pivoted inward in the collapsed position, being disposed between the first side walls (2), and wherein the second side walls (3) include an angle with the first side walls (2) in the unfolded position.

3. A pond device (1) according to claim 1, wherein the second side walls (3) are pivoted outward in the collapsed position, and wherein the second side walls (3) include an angle with the first side walls (2) in the unfolded position.

4. A pond device (1) according to claim 2 or 3, wherein the second side walls (3) each comprise at least two mutually pivotable side panels (3', 3") for pivoting the second side walls (3) inward/outward in the collapsed position, and wherein the side panels (3', 3") of each second side wall (3) face one another in the collapsed position.

5. A pond device (1) according to any one of the preceding claims 1 - 4, wherein the pond device (1) also comprises a bottom (5) which is pivotally connected to at least one of the first side walls (2), which bottom faces said first side wall (2) in the collapsed position and which includes an at least substantially right angle with said first side wall (2) in the unfolded position.

6. A pond device (1) according to claim 5, wherein the bottom (5) comprises at least two bottom panels (5', 5") which are pivotally connected to the first side walls (2), and wherein each bottom panel (5', 5") faces a corresponding first side wall (2) in the collapsed position and includes an at least substantially right angle therewith in the unfolded position.

7. A pond device (1) according to any one of the preceding claims, 1 - 6, wherein the pond device (1) is at least substantially made of plastic or wood.

8. A pond device (1) according to any one of the preceding claims 1 - 7, wherein a flexible bag (9) is provided between the first side walls (2) and the second side walls (3) in the unfolded position so as to form the fluid reservoir (6).

## Patentansprüche

1. Teich (1) umfassend ein Fluidreservoir (6), wenigstens zwei gegenüberliegende erste Seitenwände (2) und wenigstens zwei gegenüberliegende zweite Seitenwände (3), wobei der Teich zwischen einer zusammengeklappten Stellung, in welcher die ersten Seitenwände (2) aufeinander zu weisen und einer aufgeklappten Stellung, in welcher die ersten Seitenwände (2) von einander weg weisen, bewegbar ist, wobei die ersten und die zweiten Seitenwände (2, 3) entlang Kanten (4) von ihnen schwenkbar miteinander verbunden sind und wobei die ersten Seitenwände (2) und die zweiten Seitenwände (3) gemeinsam das Fluidreservoir (6) in der aufgeklappten Stellung bilden, **dadurch gekennzeichnet, dass** die ersten Seitenwände (2) und die zweiten Seitenwände (3) mit einem Versteifungselement nahe ihrer Kanten versehen sind, wobei das Versteifungselement aus einem rechtwinkligen Rahmen (8, 10) hergestellt ist.

2. Teich (1) nach Anspruch 1, wobei die zweiten Seitenwände (3) in der zusammengeklappten Stellung nach innen geschwenkt und zwischen den ersten Seitenwänden (2) angeordnet sind, und wobei die zweiten Seitenwände (3) in der aufgeklappten Stellung einen Winkel mit den ersten Seitenwänden (2) bilden.

3. Teich (1) nach Anspruch 1, wobei die zweiten Seitenwände (3) in der zusammengeklappten Stellung nach außen geschwenkt sind und wobei die zweiten Seitenwände (3) in der aufgeklappten Stellung einen Winkel mit den ersten Seitenwänden (2) bilden.

4. Teich (1) nach Anspruch 2 oder 3, wobei die zweiten Seitenwände (3) jeweils wenigstens zwei zueinander verschwenkbare Seitenpaneele (3', 3") umfassen, um die zweiten Seitenwände (3) in die zusammengeklappte Stellung nach innen/nach außen zu verschwenken, und wobei die Seitenpaneele (3', 3") jeder zweiten Seitenwand (3) in der zusammengeklappten Stellung aufeinander zu weisen.

5. Teich (1) nach einem der vorstehenden Ansprüche 1 - 4, wobei der Teich (1) auch einen Boden (5) umfasst, der schwenkbar mit wenigstens einer der ersten Seitenwände (2) verbunden ist, wobei der Boden in der zusammengeklappten Stellung auf die erste Seitenwand (2) zu weist und der in der aufgeklappten Stellung einen zumindest im Wesentlichen rechten Winkel mit der ersten Seitenwand (2) bildet.

6. Teich (1) nach Anspruch 5, wobei der Boden (5) wenigstens zwei Bodenpaneele (5', 5") umfasst, die schwenkbar mit den ersten Seitenwänden (2) verbunden sind, und wobei jedes Bodenpaneel (5', 5") in der zusammengeklappten Stellung zu einer entsprechenden ersten Seitenwand (2) weist und in der aufgeklappten Stellung einen zumindest im Wesentlichen rechten Winkel damit bildet.

7. Teich (1) nach einem der vorstehenden Ansprüche 1 - 6, wobei der Teich (1) zumindest im Wesentlichen aus Kunststoff oder Holz hergestellt ist.

8. Teich (1) nach einem der vorstehenden Ansprüche 1 - 7, wobei ein flexibler Sack (9) zwischen den ersten Seitenwänden (2) und den zweiten Seitenwänden (3) in der aufgeklappten Stellung vorgesehen ist, um das Fluidreservoir (6) zu bilden.

## Revendications

1. Bassin (1) comprenant un réservoir de fluide (6), au moins deux premières parois latérales opposées (2) et au moins deux deuxièmes parois latérales opposées (3), dans lequel le bassin peut être déplacé entre une position repliée, dans laquelle les premières parois latérales (2) se font face l'une l'autre, et une position dépliée, dans laquelle les premières parois latérales (2) sont opposées l'une à l'autre, dans lequel les premières et les deuxièmes parois latérales (2, 3) sont interconnectées de manière pivotante le long de leurs bords (4), et dans lequel les premières parois latérales (2) et les deuxièmes parois latérales (3) définissent conjointement le réservoir de fluide (6) dans la position dépliée, **caractérisé en ce que** les premières parois latérales (2) et les deuxièmes parois latérales (3) sont dotées d'un élément raidisseur près de leurs bords, dans lequel l'élément raidisseur est constitué d'un cadre rectangulaire (8, 10).

2. Bassin (1) selon la revendication 1, dans lequel les deuxièmes parois latérales (3) sont pivotées vers l'intérieur dans la position repliée, disposées entre les premières parois latérales (2), et dans lequel les deuxièmes parois latérales (3) comprennent un angle avec les premières parois latérales (2) dans la position dépliée.

3. Bassin (1) selon la revendication 1, dans lequel les deuxièmes parois latérales (3) sont pivotées vers l'extérieur dans la position repliée, et dans lequel les deuxièmes parois latérales (3) comprennent un angle avec les premières parois latérales (2) dans la position dépliée.

4. Bassin (1) selon la revendication 2 ou 3, dans lequel les deuxièmes parois latérales (3) comprennent chacune au moins deux panneaux latéraux mutuellement pivotants (3', 3") pour faire pivoter les deuxièmes parois latérales (3) vers l'intérieur/extérieur dans la position repliée, et dans lequel les panneaux latéraux (3', 3") de chaque deuxième paroi latérale (3) se font face l'un l'autre dans la position repliée.

5. Bassin (1) selon l'une quelconque des revendications précédentes 1 - 4, dans lequel le bassin (1) comprend aussi un fond (5) qui est relié de manière pivotante à au moins une des premières parois latérales (2), lequel fond fait face à ladite première paroi (2) dans la position repliée et qui comprend un angle au moins sensiblement droit avec ladite première paroi latérale (2) dans la position dépliée.

6. Bassin (1) selon la revendication 5, dans lequel le fond (5) comprend au moins deux panneaux de fond (5', 5") qui sont reliés de manière pivotante aux premières parois latérales (2), et dans lequel chaque panneau de fond (5', 5") fait face à une première paroi latérale correspondante (2) dans la position repliée et comprend un angle au moins sensiblement droit avec celle-ci dans la position dépliée.

7. Bassin (1) selon l'une quelconque des revendications précédentes 1 - 6, dans lequel le bassin (1) est constitué au moins sensiblement de plastique ou de bois.

8. Bassin (1) selon l'une quelconque des revendications précédentes 1 - 7, dans lequel un sac flexible (9) est prévu entre les premières parois latérales (2) et les deuxièmes parois latérales (3) dans la position dépliée de façon à former le réservoir de fluide (6).
